Europäisches Patentamt

European Patent Office

Office européen des brevets

(11) Publication number: **0 093 547**

**B1**

(12) **EUROPEAN PATENT SPECIFICATION**

(45) Date of publication of patent specification: **17.09.86**

(21) Application number: **83302275.9**

(22) Date of filing: **21.04.83**

(51) Int. Cl.⁴: **H 02 K 41/03**

(54) Linear motor.

(30) Priority: **21.04.82 JP 67575/82**
**23.07.82 JP 129338/82**
**26.07.82 JP 130672/82**
**29.07.82 JP 133432/82**

(43) Date of publication of application:
**09.11.83 Bulletin 83/45**

(45) Publication of the grant of the patent:
**17.09.86 Bulletin 86/38**

(84) Designated Contracting States:
**DE FR GB**

(56) References cited:
**DE-A-2 413 410**
**US-A-3 869 625**

**Patent Abstracts of Japan vol. 5, no. 149, 19
September 1981**

**Patent Abstracts of Japan vol. 4, no. 165, 15
November 1980**

**Patent Abstracts of Japan vol. 4, no. 170, 22
November 1980**

(73) Proprietor: **Matsushita Electric Industrial Co.,
Ltd.**
**1006, Oaza Kadoma**
**Kadoma-shi Osaka-fu, 571 (JP)**

(72) Inventor: **Onodera, Hiromi**
**7-4-2, Korigaoka**
**Hirakata-shi Osaka-fu (JP)**
Inventor: **Wakabayashi, Noriaki**
**21-46, Higashikori Motomachi**
**Hirakata-shi Osaka-fu (JP)**
Inventor: **Yamada, Kiichiro**
**3, 1-chome, Naka-hozumi**
**Ibaraki-shi Osaka-u (JP)**
Inventor: **Sugizaki, Yasushi**
**3-14, Miyuki Higashi-machi**
**Neyagawa-shi Osaka-fu (JP)**

(74) Representative: **Crawford, Andrew Birkby et al
A.A. THORNTON & CO. Northumberland House
303-306 High Holborn
London WC1V 7LE (GB)**

Courier Press, Leamington Spa, England.

## Description

This invention relates to a linear motor in which a movable element shifts linearly.

Description of prior art

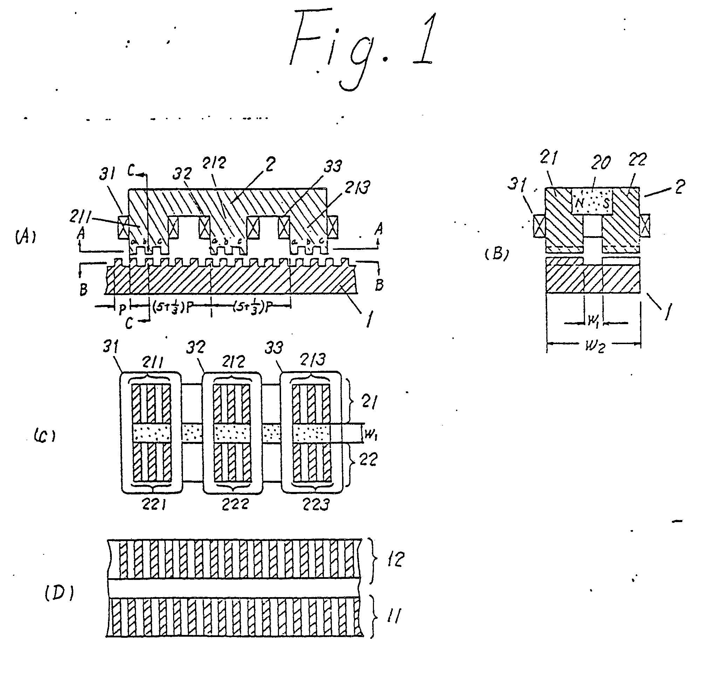

Fig. 1 is a block diagram which shows a prior art of the linear motor. (A) is a vertical sectional view, (B) is a sectional view of C—C line of (A), (C) is sectional view of A—A line of (A) and (D) is sectional view of B—B line. In Fig. 1, 1 is a guiding path composed of magnetic materials, 2 is the movable element which faces the guiding path through a minute gap, which is a three phase linear motor here. Movable element 2 is composed of a pair of iron cores 21 and 22 with three field cores respectively, 211, 212, 213, 221, 222 and 223, permanent magnet 20 which is positioned between a pair of iron cores 21 and 22 to provide bias magnetic flux to said minute gap and three coils 31, 32 and 33 which are wound around adjacent field cores 211 and 221, 212 and 222, and 213 and 223 of a pair of iron cores 21 and 22. Three magnetic teeth which have the same pitch as pitch P for magnetic teeth on guiding path 1 are on edges which face each field core's guiding path 1. Magnetic teeth's phases of field cores 211, 212 and 213 (221, 222 and 223) which are on the same iron core among field cores of iron cores 21 and 22 are positioned being shifted as much as $(N \pm n/m)P$ with each other (provided that N is an integer, m is number of linear motor's phases, n is an integer, m>n which is (5+1/3)P in this example). As shown in Fig. 1(C), magnetic teeth on adjacent field cores (211, 221; 212, 222; 212, 223) of iron cores 21 and 22 have the same phase. As shown in Fig. 1(D), guiding path 1 has rows of magnetic teeth 11 and 12 which has the same pitch P as magnetic teeth on iron cores 21 and 22 of movable element 2. Rows of magnetic teeth 11 and 12 are arranged shifting phases as much as 1/2P in the direction of said movable element 2's movement.

In a device which has an above construction, said permanent magnet 20 is magnetized in the direction as shown in Fig. (B) and magnetic flux generated by said permanent magnet 20 returns to permanent magnet 20 through field cores 211, 212 and 213 of iron core 21, guiding path 1's row of magnetic teeth 11 which faces magnetic teeth a, b and c through a minute gap and passing from row of magnetic teeth 12, through a minute gap, to each magnetic tooth of iron core 22 and each field core 221, 222 and 223. That means there is bias magnetic flux in a gap between said movable element 2's magnetic teeth and guiding path 1's magnetic teeth. When exciting current is conducted to said coil 31, magnetic flux generated by the exciting current is overlapped with said bias magnetic flux.

When exciting current is conducted to coil 31 in the direction in which magnetic flux between field core 211 on the iron core 21 side and guiding path 1 is increased, magnetic flux between field core 221 on the iron core 22 side and guiding path 1 is reduced. As a result, movable element 2's field core 211 and guiding path 1 pull with each other and movable element 2 is retained in a position shown in Fig. 1(S) in which its gap's reactance is minimized.

Then, when exciting current is conducted to coil 32 in the direction in which magnetic flux between field core 212 on the iron core 21 side and guiding path 1 is increased, both of them pull with each other, thus movable element 2 shifts to the right. Movable element 2 shifts as much as 1/3P, as phases between field core 211's magnetic teeth a, b and c and field core 212's magnetic teeth a, b and c shift as much as 1/3P.

In the same manner, when exciting current is conducted to coil 33, 31, 32, 33, ....... respectively, the movable element shifts to the right respectively with 1/3P as a minimum shifting length. When exciting current is conducted to coil 33, 32 and 31 respectively, movable element 2 shifts to the left.

On the other hand, if the direction of exciting current conducted to coils 31, 32 and 33 is reversed from said case, magnetic flux between field core 221 and guiding path 1 is increased in as shown in Fig. 1(B) and they pull with each other. Therefore, when exciting current is respectively conducted to coil 32, 33, 31, ......, in the reverse direction from said case, movable element 2 shifts to the right with 1/3P as a minimum shifting length. Also, when current is conducted to coils 33, 32, 31, ... ... respectively in the reverse direction from said case, movable element 2 shifts to the left with 1/3P as a minimum shifting length. As rows of magnetic teeth 11 and 12 of guiding path 1 are formed with phases of teeth are shifted as much as 1/2P, when the direction of exciting current to be conducted to coils is positive and negative (reversed stopping position of movable element 2 are not overlapped with each other and are shifted as much as 1/6P). That is, movable element 2 shifts as much as minimum shifting length 1/6P by switching exciting current to be conducted to coils 31, 32 and 33 and changing the direction of exciting current to energize coils respectively.

This operation will be more specifically explained. With respect to the phase of the magnetic teeth of the field core 211, the phases of the field cores 211, 212, 213, 221, 222 and 223 are expressed as 0−2/6P, −4/6P, −3/6P, −5/6P and −1/6P, respectively. Accordingly, the movable element 2 can be shifted with the minimum shifting length of 1/6P by flowing exciting currents through coils 31, 32 and 33 so that the teeth on the field cores 211, 223, 212, 221, 213 and 222 are attracted to the teeth on the guiding path 1 in the order named. In other words, exciting currents are flown in turn through coil 31 in positive direction, through coil 33 in negative direction, through coil 32 in positive direction, through 31 in negative direction, through 33 in positive direction, and through 32 in negative direction.

To improve the thrust force of this type of linear motor, it is very effective to increase bias magnetic flux between magnetic teeth on the movable element iron cores and these on the guiding path. One of means to expand bias magnetic flux is to increase a total magnetic flux generated by the permanent magnet which provides bias magnetic flux. Another means is to try to minimize leakage flux which does not contribute to the linear motor thrust force among magnetic flux generated by the permanent magnet.

Considering a prior art which has a construction as shown in Fig. 1 in said point of views, small distance $W_1$ between adjacent field cores 211 and 221, 212 and 222, and 213 and 223 of iron cores 21 and 22 make increase leakage flux between them and it occupies the largest proportion in leakage flux of entire magnetic circuit. Therefore, the magnetic flux of the permanent magnet is not used effectively and there are a lot of waste, thus the motor's operation is not quite effective.

If said distance $W_1$ is expanded, it is possible to reduce leakage magnetic flux, but width $W_2$ of guiding path 1 should be also expanded accordingly. Expansion of width $W_2$ of guiding path 1 is made on the entire length of guiding path 1, thus weight of the guiding path increases greatly. Due to this increase, weight of a device into which the motor is integrated naturally increases. Also, for X—Y plotter into which the motor is integrated, weight increase of the guiding path gives a lot of adversable effect on the velocity of plotting, as a motor of one spindle sets shift positioning of a motor of another spindle with its guiding path.

Movable element magnetic teeth of the prior art as shown in Fig. 1 is difficult to be machined precisely in terms of dimension. Generally, movable element magnetic teeth are machined by feeding a machining knife by magnetic teeth pitch. When the number of linear motor's phases is increased to 5, 6, ......, the type of magnetic teeth with different phases on the same iron core is increased to 5, 6, ... ... and their phase difference become detailed to $2\pi/5$ and $2\pi/6$, ... ..., thus feeding pitch of the machining knife should be changed many times during machining, therefore there is a defect that machining cannot be made precisely.

As a result the linear motor is subject to the deterioration of precision of positioning more easily.

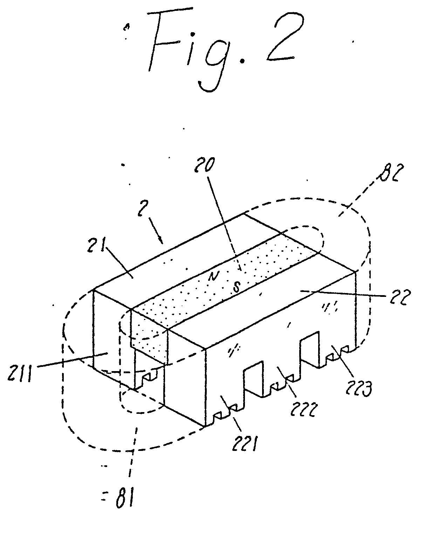

Also, thrust force for shifting generated in each field core is actually very uneven in this type of linear motor. The biggest reason for this is the amount of bias magnetic flux wihch passes each field core is very different. This difference is mainly caused by leakage flux. Fig. 2 is the oblique view of movable element 2 to explain leakage magnetic flux of the prior art shown on Fig. 1. Half cylinder part 81 and 82 drawn in dots show a leakage magnet path in which bias magnetic flux is leaked on both sides of a pair of iron cores 21 and 22. This kind of leakage magnet path makes it the level of bias magnetic flux which passes through each field core. That is, comparing with bias magnetic flux which passes central field cores 212 and 222, bias magnetic flux which passes through field cores 211, 221, 213 and 223 which are positioned outside of 212 and 222 are smaller.

In addition to that, magnetic flux of coils are different depending on each field core. This is mainly due to the difference of magnetic resistance depending on the length of iron core magnetic path. For instance, in the case of iron core 21, magnetic flux generated by coil 32 which is wound around field core 212 at the center of iron core 21 separately goes around field core 211 and 213 on the both sides of coil 32, but magnetic flux, for instance, of coil 31 wound around outside field core 211, goes around separately field core 212 which is next to 211 and, further, field core 213 which is next to 212. Thus, in latter case, iron core's magnetic path is slightly longer and magnetic flux of outside field cores tends to be slightly smaller than that of the central part and field cores.

It is becoming apparent that deviation of thrust force caused by each field core is mainly affected by two kinds of deviation, deviation of bias magnetic flux and that of magnetic flux caused by coils. Deviation of magnetic flux caused by coils can be almost neglected by lowering iron core's reluctance, but deviation of bias magnetic flux is relatively large and, as a consequence, the linear motor's thrust force of the prior art is deviated to a large extent.

JP—A—56—83259 (Patent Abstracts of Japan, No. 149, 19 September 1981) discloses a linear motor comprising: a guiding path having magnetic teeth provided at a constant pitch P in the longitudinal direction of said guiding path; and a movable element which is in spaced opposed relation to said guiding path with a small gap therebetween and movable along said guiding path, wherein said movable element comprises: a pair of iron core arrays spaced from each other in said longitudinal direction; means connected between said pair of iron core arrays for supplying bias magnetic flux thereto; and means electrically associated with said pair of iron core arrays for energizing thereof, each of said pair of iron core arrays comprising a plurality of field cores disposed side by side in a transverse direction to said longitudinal direction, each of said field cores having on a surface facing said guiding path teeth provided at said pitch P in said longitudinal direction. However, although this motor operates satisfactorily the need still exists for a linear motor with higher efficiency and performance and to improve the manufacturing methods of the magnetic teeth and precision in teeth dimensions.

This invention is to provide a novel linear motor in which defects of the prior art are eliminated.

Thus an object of the invention is to provide a linear motor with high efficiency, high performance and large thrust force. Another object of the invention is to provide a linear motor which is constructed so that machining work of magnetic teeth and dimension precision can be easily improved.

A further object of the invention is to provide a smooth and high grade linear motor which has even thrust force for shifting generated by each field core.

The present invention provides a linear motor as described in JP—A—56—83259 but characterized in that: said teeth on the field cores of each of the pair of iron core arrays have the same spatial phase, and the phase of the teeth on the field cores of one of the pair of iron core arrays is shifted in spatial phase by $1/2 \cdot P$ relative to the teeth on the field cores of the other of the pair of iron core arrys; that the magnetic teeth of said guiding path consists of parallel rows of magnetic teeth aligned with respective parallel field cores of the arrays, each row of said parallel rows of magnetic teeth being shifted in spatial phase by $(n/m) \cdot P$ relative to an adjacent row, where m is the number of phases of said linear motor and n being an integer, and $m>n$; and that said field cores of the arrays are arranged in pairs in the longitudinal direction with each pair consisting of one field core from each array, the field cores of each pair being aligned with a respective row of the guiding path, and the energizing means being arranged to subsequently energize said pairs of field cores.

Since in accordance with the invention the field cores of each iron core array have the same spatial phase, it is not necessary to change the feeding pitch of a machining knife during manufacture, but only when changing the cutting operation to the other iron core array. Hence machining work is simplified and precision is improved. By 'spatial phase', it will be understood that two teeth having the same position in the direction of movement have the same phase, and for teeth having a recurrent spacing of P therebetween in the direction of movement, the space P constitutes a single phase cycle, with a phase difference equal to P. Thus teeth having a spacing not equal to P or a multiple thereof are said to be out of phase.

During design and manufacture of the motor, tha distance between a pair of iron core arrays can be extended. Leakage magnetic flux from the field cores of one iron core array to the other iron core array can be largely reduced by extending this distance. Thus, magnetic flux generated by energizing means can be effectively used. This increases bias magnetic flux and contributes to improving thrust force. When the device has such construction, the width of the guiding path is not changed and its weight is hardly affected.

In the linear motor of the invention, areas of magnetic teeth on a pair of iron core arrays and magnetic teeth on the guiding path can be designed at will, as the number of magnetic teeth can be easily increased in the direction of the movable element's movement. Therefore, it is easy to avoid magnetic saturation caused by excessive bias magnetic flux. Also, there is almost no increase in the guiding path's weight, as the width of the guiding path does not change at all even when the number of movable element magnetic teeth are increased in the direction of the movable element's movement. Hence thrust force and efficiency may be improved.

These objects and features of the invention can be understood more clearly by the following detailed description taken in connection with the accompanying drawings.

Brief description of the drawings
    Fig. 1(A), (B), (C) and (D) are sectional views of each part showing an example of the linear motor prior art.
    Fig. 2 is an oblique view to describe leakage magnetic flux of the linear motor prior art.
    Fig. 3(A), (B), (C) and (D) are sectional views of each part showing embodiments of the invention.
    Fig. 4 and Fig. 5 are block diagrams of major parts showing other embodiments of the invention.
    Fig. 6(A) and (B) are a plain view and a sectional view of major parts showing embodiments of the guiding path which can be used for the invention.
    Fig. 7(A), (B), (C) and (D) are sectional views of each part showing other embodiments of the invention.
    Fig. 8 is a sectional view of major parts showing other embodiments of the invention.
    Fig. 9(A), (B), (C), (D) and (E), Fig. 10(A), (B), (C), (D) and (E) and Fig. 11(A), (B), (C), (D) and (E) are sectional views of each part and an oblique view of major parts showing other embodiments of the invention.

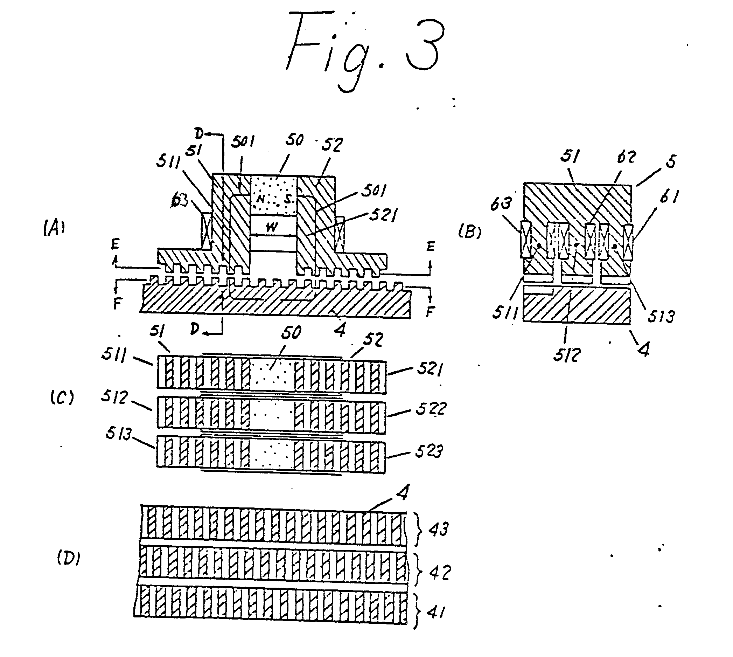

Detailed description of the preferred embodiments
    Fig. 3 is a block diagram showing embodiments of the invention.
    (A) is a vertical sectional view.
    (B) is a sectional view of D—D line of (A).
    (C) is a sectional view of E—E line of (A).
    (D) is a sectional view of F—F line of (A).
    In Fig. 3, movable element 5 is composed of a pair of iron core arrays 51 and 52 with plural field cores (in this embodiment, the following three: 511 and 512, 513 and 521, 522 and 523), permanent magnet 50 which is positioned between a pair of iron cores 51 and 52 to provide bias magnetic flux and plural coils (61, 62 and 63 here) wound around adjacent field cores 511 and 521 of a pair of iron cores 51 and 52 (512 and 522, 513 and 523).
    Plural magnetic teeth with pitch P are formed on the edge which faces the guiding path of (511, 512, 513, 521, 522 and 523). As for the relationship of phases between each magnetic tooth, magnetic teeth on iron core 51's field cores 511, 512 and 513 has the same phase as shown in Fig. 3(C). Phases of magnetic teeth of iron cores 51 and 52's adjacent field cores 511 and 52T (512 and 522, 513 and 523) are shifted as much as $1/2 \cdot P$. Guiding path 4 is composed of magnetic materials and plural magnetic teeth with the same pitch P as that for movable element 5's magnetic teeth are on the surface which faces magnetic teeth on said movable element 5. Plural rows of said guiding path 4's magnetic teeth exist along the direction of said movable element 5's movement (in this embodiment, three rows: 41, 42 and 43). As for the relationship of phases between rows of magnetic teeth 41, 42 and 43, phases are shifted as much as $n/m \cdot p$ in the direction of movable element 5's movement (m is the number of phases of the linear motor and n is an integer where relationship is m>n). In this embodiment, rows of magnetic teeth 41 and 42 (42 and 43, 43 and 41) are positioned shifting phases as much as 1/3P.

In the linear motor with such construction, if permanent magnet 50 is magnetized in the direction as shown in Fig. 3(A), magnetic flux is generated between movable element 5 and guiding path 4 in the direction as shown in 501 of the same Fig. That is, there is bias magnetic flux in the direction toward iron core 51, guiding path 4 and iron core 52. When exciting current is conducted to coil 61 wound around field cores 511 and 521, magnetic flux generated by this exciting current is overlapped with bias magnetic flux, magnetic flux increases between field core 511 and guiding path 4's row 41 of magnetic teeth and magnetic flux decreases between field core 521 and guiding path 4's row 41 of magnetic teeth. As a result, movable element 5's field core 511 and guiding path 4's row of magnetic flux pull with each other. Movable element 5 is retained in the position as shown in Fig. 3(A). Then, when exciting current is conducted to coils wound around field cores 512 and 522, magnetic flux increases between field core 512 and guiding path 4's row of magnetic teeth 42 and pull with each other, thus movable element 5 shifts to the right. Movable element 5 shifts as much as 1/3P, as phases of row of magnetic teeth 41 and 42 on the guiding path are arranged being shifted as much as 1/3P in the direction of the movable element's movement. In the same manner, when exciting current is conducted to coils 63, 61, 62, 63, . . . . . . respectively, movable element 5 shifts to the right respectively with $1/3 \cdot P$ as a minimum shifting length. When exciting current is conducted to coils 63, 62, 61, . . . . . . respectively, movable element 5 shifts to the left. On the other hand, when the direction of exciting current to be conducted to coils 61, 62 and 63, is reversed from the said case, magnetic flux increases between iron core 52's field core 521 (522, 523) and guiding path 4's row 41, 42, 43 magnetic teeth and they pull with each other. Thus when exciting current is conducted to coils 61, 62, 63, . . . . . . in the reversed direction from the said case, movable element 5 shifts to the right with 1/3P as a minimum shifting length. Also, current is conducted to coils 63, 62, 61, . . . . . . respectively in the reverse direction from the said case. As phases of magnetic teeth on movable element 5's field cores 511 and 521 (512 and 522, 513 and 523) are shifted as much as $1/2 \cdot P$ in the direction of movable element 5's movement, when direction of exciting current to be conducted to coils is positive and negative (reverse direction), stopping positions of movable element 5 are not overlapped and shifted as much as 1/6P. That is, movable element 5 shifts with 1/6P as a minimum shifting length by switching exciting current to be conducted to coils 61, 62 and 63 and changing the direction of exciting current to magnetize coils respectively.

This operation will be more specifically explained. Assuming that the phase of the magnetic teeth of the field core 511 with respect to the phase of the teeth on the fixed element 4 is zero, the phases of the field cores 511, 512, 513, 521, 522 and 523 are expressed as 0, −2/6P, −4/6P, −3/6P, −5/6P and −1/6P, respectively. Accordingly the movable element 2 can be shifted with the minimum shifting length of 1/6P by flowing exciting currents through coils 61, 62 and 63 so that the teeth on the field cores 511, 523, 512, 521, 513 and 522 are attracted to the teeth on the guiding path 1 in the order named. In other words, exciting currents are flown in turn through coil 63 in positive direction, through coil 61 in negative direction, through coil 62 in positive direction, through 63 in negative direction, through 61 in positive direction, and through 62 in negative direction. Now, structural features of the linear motor of the invention is described.

In Fig. 3, distance between a pair of iron cores 51 and 52 can be extended. Leakage magnetic flux from the field core of movable element 5's iron core 51 to iron core 52's field core can be largely reduced by extending W. Thus, magnetic flux generated by permanent magnet 50 can be effectively used. This increases bias magnetic flux and contributes to improving thrust force. When the device has such construction, the width of the guiding path is not changed and its weight is hardly affected.

In the linear motor of the invention, although the width of magnetic teeth is shortened, areas of magnetic teeth on a pair of iron cores 51 and 52 of movable element and magnetic teeth on the guiding path can be designed at will, as the number of magnetic teeth can be easily increased in the direction of the movable element's movement. Therefore, it is easier to avoid magnetic saturation caused by excessive bias magnetic flux. Also, there is almost no increase in the guiding path's weight. As the width of the guiding path does not change at all even when the number of movable element magnetic teeth are increased in the direction of the movable element's movement.

As explained, the linear motor of the invention can increase thrust force improving efficiency and this does not increase guiding path's weight.

According to a sample made by the inventor, it has been confirmed that the linear motor of the invention has the equivalent width and weight to that of the guiding path and almost equivalent dimension and weight to that of the movable element, and thrust force is increased by 30%~40%. Therefore, it can be said that the linear motor of the invention is most suitable for the X—Y plotter, as mentioned before.

Further, the linear motor movable element 5's construction of the invention is very advantageous in terms of defects of prior arts that it is difficult to precisely machine movable element magnetic teeth. That is, among plural field cores of movable element 5, phase of each magnetic tooth on the field cores of the same iron core is the same, thus, no matter how the number of linear motor's phase increases, there is only one kind of magnetic teeth on the same iron core in terms of phase, therefore, it is necessary to change the feeding pitch of the machining knife only when setting phase difference $1/2 \cdot P$ in a pair of iron cores. Therefore, the construction of the linear motor movable element of the invention is really excellent in which machining work of magnetic teeth is improved and precision of dimension can be easily improved. In above description, operation of the linear motor of the invention is explained as a step motor, but it does not damage advantages of the invention even when position detecting means, non-contact current feeding means and so on are installed there to use it as a electronic commutator linear motor.

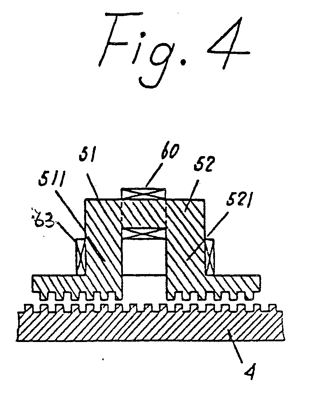

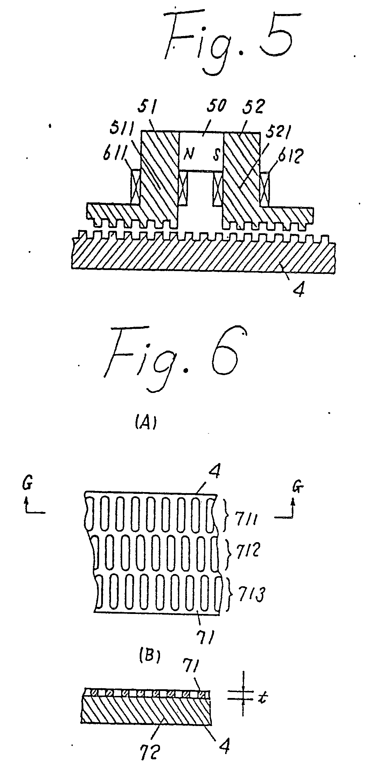

Fig. 4 and Fig. 5 are block diagram of major parts showing other embodiments of the linear motor of the invention.

In embodiments of Fig. 3, permanent magnet 50 is positioned between a pair of iron cores 51 and 52 to provide bias magnetic flux.

It is also possible to provide bias magnetic flux by winding coil 60 around the magnetic path between iron cores 51 and 52, as shown in Fig. 4.

As for coils 61, 62 and 63 in Fig. 3, which are wound around a pair of field cores 511 and 521 (512 and 522, 513 and 523), coils 611 and 612 can be wound around field cores 511 and 521 respectively as shown in Fig. 5 to connect them in serial or conduct exciting current to them separately. It is the same for field cores 512, 522, 513 and 523.

When distance between a pair of iron cores 51 and 52 is extremely extended and coils are wound around a pair of field cores 511 and 521 (512 and 522, 513 and 523), the length of coils is extended and ohmic loss increases. In the view point of linear motor's efficiency, it is desirable that ohmic loss is as small as possible.

The embodiment of Fig. 5 is very effective to reduce ohmic loss as the length of coils can be shortened.

Fig. 6 is an embodiment to realize, with ease and good precision, guiding path 4's construction of linear motor's embodiments of the invention in Fig. 3, Fig. 4 and Fig. 5. Fig 6(A) is a plain view of the guiding path and (B) is a sectional view of G—G line of (A).

In Fig. 6, laminated material (hereafter it is referred to as an etching lamination) made of magnetic materials with plural slits is fixed to substrate 72 made of magnetic materials by etching, etc. to form magnetic teeth equivalently, and thus realizing guiding path 4. Plural rows (in this embodiment, three rows: 711, 712 and 713) of etching lamination 71's slits are formed along the direction of movable element 5's movement. Phases of row of slits 711, 712 and 713 are shifted by $------ n/m \cdot v$ in the direction of said movable element's movement (provided that m is the number of phase of the linear motor and n is integer, m>n and they are shifted $----- $ by $1/3 \cdot P$ with each other in the embodiment).

The precision of dimension of etching lamination 71's each slit depend on the precision of etching determined by the quality of laminated material and thickness t. Therefore, even when the row of magnetic teeth of guiding path 4 is increased to 5 rows, 6 rows, ...... and become complicated, as the number of phases of the linear motor increases to 5, 6, ......, the level of etching lamination's production is not affected, precision is not deteriorated and production can be made very easily. The etching lamination's slits of the embodiment penetrate the laminated material, but there is no doubt that half etching is acceptable, and thus, it has same advantages in the view point of precision and easy production.

Although it is not shown in figure, said advantages are not damaged at all even when half etching is directly made to substrate 72 made of magnetic materials to produce guiding path 4 without using etching lamination 71.

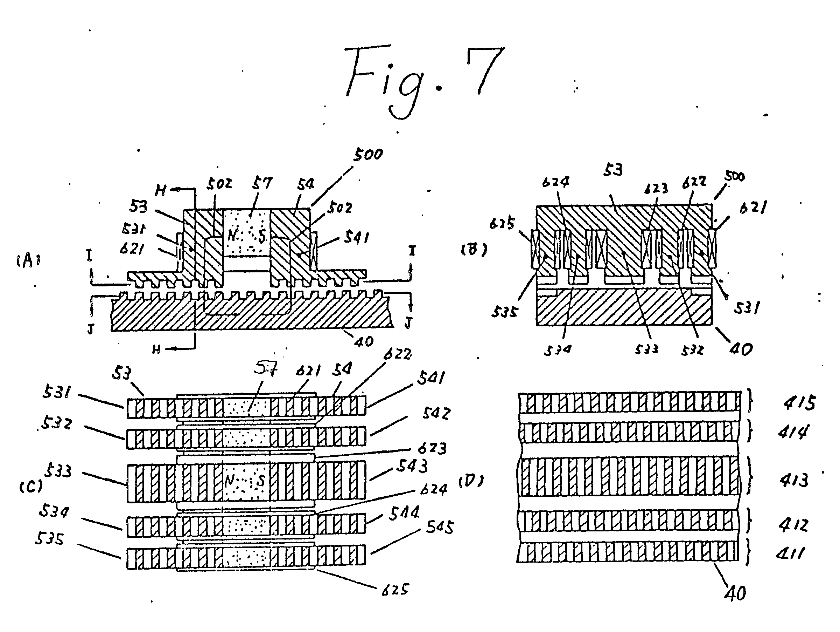

Fig. 7 is a block diagram showing other embodiments of the invention. (A) is a vertical sectional view, (B) is a sectional view of H—H line of (A), (C) is a sectional view of I—I line of (A) and (D) is a sectional view of J—J line of (A).

In Fig. 7, movable element 500 is composed of a pair of iron cores 53 and 54 with 2m-j field cores (in this embodiment, m-3, j=1 there are five: 531, 532, 533, 534, 535, 541, 542, 543, 544, 545), permanent magnet 57 which is positioned between these iron cores to provide bias magnetic flux and plural coils. (There are here: 621, 622, 623, 624 and 625) wound around adjacent field cores 531 and 541 (532 and 542, 533 and 543, 534 and 544, 535 and 545) of a pair of iron cores. Magnetic teeth groups with pitch P is formed on the edge of each field core which faces the guiding path. As for the relationship of phases between each magnetic teeth group, magnetic teeth on iron core 53's field core 531, 532, 533, 534 and 535 have the same phase, magnetic teeth on iron core 54's field cores 541, 542, 543, 544 and 545 have the same phase and phases of magnetic teeth of adjacent field cores 531 and 541 (532 and 542, 533 and 543, 534 and 544, 535 and 545) are shifted as much as $1/2 \cdot p$. The magnetic teeth group of each of field cores 531, 532, 534, 535, 541, 542, 544 and 545 has the same area S1, the magnetic teeth group of each of field cores 533 and 543 has the same area S2 and S2 is twice as large as S1. Coils 621, 622, 624 and 625 which are respectively wound around over field cores 531 and 541, 532 and 542, 534 and 544 and 535 and 545 have the same number of turns ($N_1$). When

the number of turns of coild 623 wound around field cores 533 and 543 is $N_2$, $N_2$ is twice as many as $N_1$. Further, coils 621 and 625 (622 and 624) are connected in serial or parallel to conduct exciting current simultaneously to coils 621 and 625 (622 and 624). Guiding path 40 is made of magnetic materials and plural magnetic teeth with the same pitch as for movable element 500's magnetic teeth are formed on a surface which faces magnetic teeth on said movable element 500. There are plural rows (in this embodiment, five rows: 411, 412, 413, 414, 415) of magnetic teeth on said guiding path 40 along the direction of said movable element 500's movement. As for the relationship of phases between these rows of magnetic teeth, rows of magnetic teeth 411 and 415 (412 and 414) have the same phase, rows of magnetic teeth 411, 412, 413 are shifted—$n/m \cdot P$ (m is the number of phases of the linear motor and n is an integer where relationship is m>n) and, in this embodiment, phases are shifted as much as $1/3 \cdot P$ for rows of magnetic teeth 411 and 412 (412 and 413, 413 and 411). That is, the linear motor's embodiment of the invention in Fig. 7 is a three phase motor. Considering the relationship of phases of magnetic teeth on each field core 531, 532, 533, 534, 535, 541, 542, 543, 544 and 545 of movable element 500 to guiding path 40's each row of magnetic teeth, field cores 531 and 535 (532 and 534, 541 and 545, 542 and 544) have the same phase and all others have different phases.

As described, if permanent magnet 57 is magnetized in the direction as shown in Fig. 7(A) in the linear motor, magnetic flux is generated in. the direction as shown in 502 of the same Fig. between movable element 500 and guiding path 40. That means there is bias magnetic flux towards iron core 53, guiding path 40 and iron core 54. When exciting current is conducted to coils 621 and 625 which are respectively wound around field cores 531 and 541 and 535 and 545, magnetic flux generated by this exciting current is overlapped with bias magnetic flux, magnetic flux between field cores 531, 535 and guiding path 40's rows of magnetic teeth 411, 415 is increased and magnetic flux between field cores 541, 545 and guiding path 40's rows of magnetic teeth 411, 415 decreases. As a result, movable element 500's field cores 531, 535 and guiding path 40's rows of magnetic teeth 411, 415 pull with each other and movable element 5 is retained in the position as shown in Fig. 7(A) in which reluctance of its gap is minimized. Then, when exciting current is conducted to coils 622 and 624 which are wound around field cores 532 and 542, and 534 and 544, magnetic flux between field cores 532, 534 and guiding path 40's rows of magnetic teeth 412, 414 increases and they pull with each other, thus movable element 500 shifts to the right. Movable element 500 shifts as much as 1/3P, as rows of magnetic teeth on the guiding path 411 and 415, 412 and 414 have the same phase and phases of 411, 412 are shifted as much as 1/3P in the direction of the movable element movement. In the same manner, when exciting current is conducted to coils 623, 621 and 625, 622 and 624, 623 ... ... respectively, movable element 500 shifts to the right respectively with 1/3P as a minium shifting length. When exciting current is conducted to coils 623, 622 and 624, 621 and 625, ... ..., respectively, movable element 500 shifts .to the left.

On the other hand, when the direction of exciting current to be conducted to coils 621, 622, 623, 624, 625 is reversed from the said case, magnetic flux between iron core 54's field core 541 (542, 543, 544, 545) and guiding path 40's row of magnetic teeth 411 (412, 413, 414, 415) increases. Therefore, when exciting current is conducted, in the reverse direction from the said case, to coils 621 and 625, 622 and 624, 623, ... ..., movable element 500 also shifts to the right with 1/3P as a minimum shifting length. When current is conducted, in the reverse direction from the said case, to coils 623, 622 and 624, 621 and 625, ... ... respectively, movable element 500 shifts to the left with 1/3P as a minimum shifting length. As phases of magnetic teeth on movable elements 500's field cores 531 and 541 (532 and 542, 533 and 543, 534 and 544, 535 and 545) are shifted as much as 1/2P in the direction of movable element 500's movement, when the direction of exciting current to be conducted to coils is positive and negative (reverse direction), stopping positions of movable element 500 are not overlapped and are shifted as much as 1/6P. Movable element 500 shifts with 1/6P as a minimum shifting length by changing the direction of exciting current to magnetize coils respectively. Explanation is given only on single energizing in above description, but it is needless to say that polyphase energizing can increase thrust force in the same manner as for the prior art in Fig. 1.

Thus explained linear motor of the invention has the following superior features.

In Fig. 7, magnetic teeth having the same phase which generate thrust force simultaneously on the left and right (in the direction of increment) of the movable element 500's gravity center (generated to guiding path 40's magnetic teeth) are separately positioned on the linear motor, and furthermore, distances from separately positioned magnetic teeth to the gravity center are the same. Thus, thrust force generated in each magnetic teeth can effectively work in the forwarding direction without giving rotation moment to movable element 500 and, thus, smooth operation can be realized. Therefore, this linear motor is suitable especially when large thrust force and smooth operation are required, when it is used as a step motor for positioning equipments for which high precision is required even though it is small in its size and thrust force and when it is used as a servo-motor to equipments for which smooth movements are required. Further, in terms of production, the linear motor can be polyphased easily. There is only one kind of phase of magnetic teeth on each iron core 53, 54 of movable element 500 in the same iron core and feeding pitch of a machining knife should be changed only when setting phase difference 1/2P in a pair of iron cores like the first embodiment of the invention in Fig. 3, and thus, magnetic teeth with extremely high precision can be formed and polyphase does not damage precision.

There is no doubt that when guiding path 4's rows of magnetic teeth are formed using a method such as etching, etc., the level of work and precision of machining are not changed and it can be produced easily no matter how many rows are formed. In the embodiment of the invention in Fig. 7, construction in which two field cores 533, 543 are separately positioned like other field cores (531, 532, 534, 535, 541, 542, 544, 545) does not damage advantages of the invention. Coils 621 (622, 623, 624, 625) are wound around two field cores 531 and 541 (532 and 542, 533 and 543, 534 and 544, 535 and 545), but they can be separately wound around each field core to connect then in serial. Also, it is needless to say that a coil can be used as means to provide bias magnetic flux instead of the permanent magnet.

In each embodiment of the linear motor of the invention in Fig. 3, Fig. 4, Fig. 5 and Fig. 7, deviation of thrust force generated in each field core, which is one of defects of prior arts, is not referred, but that point is explained in the following embodiment.

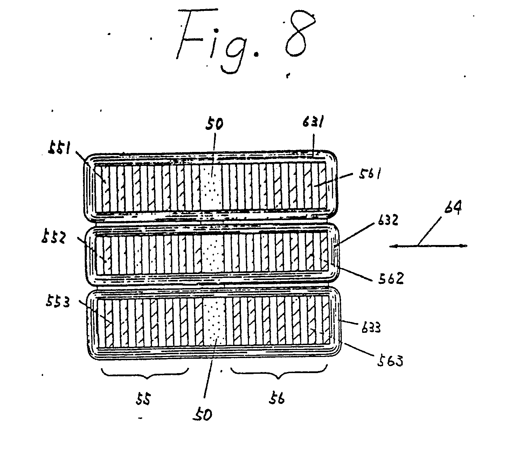

Fig. 8 is another embodiment of the linear motor of the invention. This drawing especially shows the movable element in terms of magnetic teeth. This drawing is basically corresponded to the first embodiment of the invention, Fig. 3(C). In the Fig. 8, 50 is the permanent magnet for bias magnetic flux and 55 and 56 are a pair of iron cores, 551, 552, 553 and 561, 562, 563 are field cores with magnetic teeth on said iron cores 55, 56 and 631, 632, 633 are three coils. An arrow 64 shows the direction of the movable element's movement. As this Fig. shows, field cores 551, 553 or 561, 563 which are positioned outside of the central field cores 552 or 562 have the larger area of magnetic teeth than these central field cores. In this case, the width of magnetic teeth has widened outside field cores more than central field cores, and it has consequently enlarged the area of magnetic teeth part. When it is constructed in this manner, areas of magnetic teeth and the guiding path's rows of magnetic teeth are enlarged, reluctance of the gap is reduced, more bias magnetic flux can be induced and it becomes possible to compensate leakage, thus, even thrust force can be realized as a result. In the embodiment, the area of the magnetic teeth part is adjusted by the width of its teeth, thus, thrust force of each field core can be equalized quite precisely. Also, of course, the same effects can be achieved by changing the area of the magnetic teeth part adjusting the number of teeth and setting the same width for teeth. However, adjustment is not so precise as for former case.

Not only for the embodiment in Fig. 8, it is good to provide the largest area for the most outside field core magnetic teeth part in cases in which a pair of iron cores have many field cores such as 4 and 5.

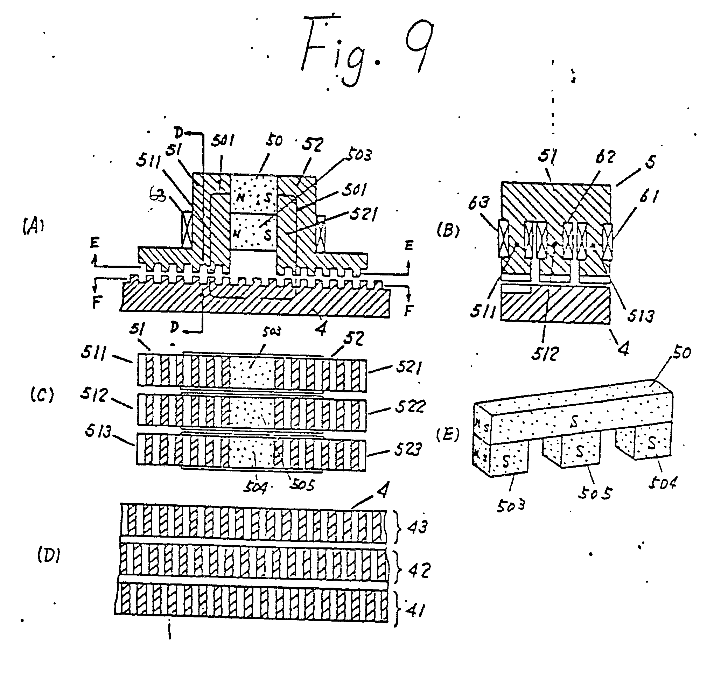

Fig. 9, Fig. 10 and Fig. 11 show embodiments of linear motor of the invention. There, component elements of the linear motor except the permanent magnet in each Fig. are the same for the first embodiment of the invention in Fig. 3 and explanation is omitted giving the same number to them.

In Fig. 9, Fig. 10 and Fig. 11, (A) is a vertical sectional view, (B) is a sectional view of D—D line of (A), (C) is a sectional view of E—E line of (A), (D) is F—F sectional view of F—F line of (A) and (E) is an oblique view of the permanent magnet.

Firstly, in the embodiment in Fig. 9, movable element 5 has permanent magnet 50 which is positioned between a pair of iron cores 51 and 52 to provide bias magnetic flux, and permanent magnets 503, 504, 505 which are positioned between each magnetic core part between a pair of iron cores 51 and 52. Said permanent magnets 503, 504 and 505 have the same dimension. As the direction of their magnetizing is adjusted to that of permanent magnet 50 and magnetic flux generated in permanent magnet 50 does not leak from adjacent field core 511 to 521 (from 512 to 522, from 513 to 523) and induced passing by the field core part, and thus, effectively utilized. A part of magnetic flux generated in further added permanent magnets 503, 504 and 505 becomes bias magnet flux of the linear motor and it also enlarges a total amount of magnetic flux.

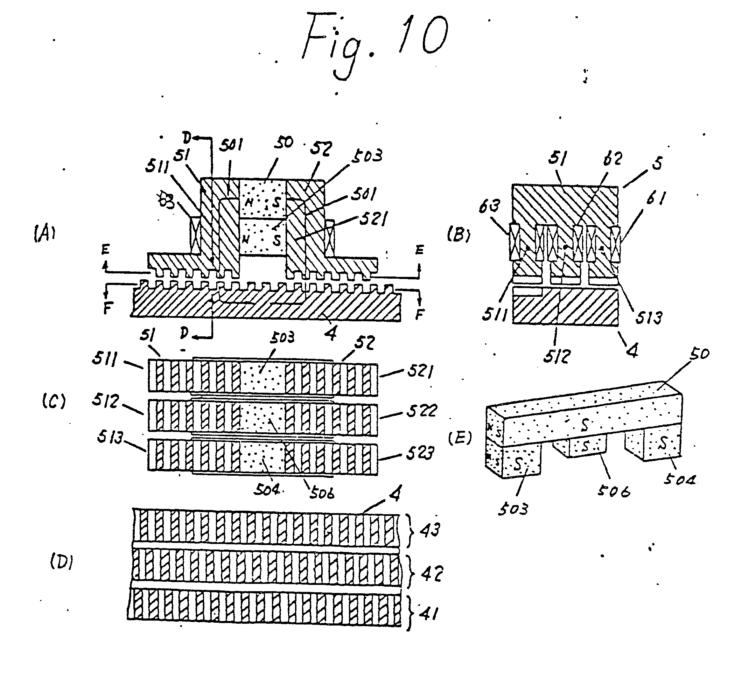

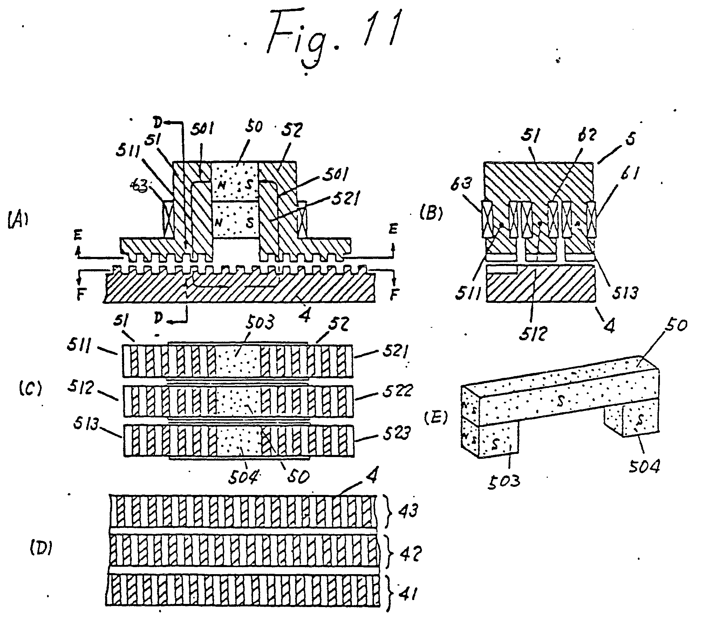

As above description shows, the effect of permanent magnet 503, 504 and 505 works for thrust force in multiple way and thrust force can be increased about 30% according to a sample made by the inventor. That is, the linear motor with larger thrust force than that of prior arts can be easily realized without changing its external dimensions at all. In the embodiment of Fig. 10, permanent magnets 50, 503 and 504 correspond to permanent magnets 50, 503 and 504 in Fig. 9 and 503 and 504 have the same dimension. The size of permanent magnet 506 is smaller than that of permanent magnet 503 and 504 and it corresponds to permanent magnet 505 in Fig. 9. These permanent magnets 503, 504, 506 can reduce the leakage of magnetic flux between adjacent fields cores of the adjacent iron cores like embodiment in Fig. 9. Also, linear motor's thrust force can be increased by increasing a total amount of bias magnetic flux extending the effective area of the permanent magnet. In addition to that, in the embodiments in Fig. 10, the amount of bias magnetic flux which passes by magnetic teeth on the central fields cores is adjusted by designing the dimension of permanent magnet 506 positioned between central field core parts at will to adjust thrust force generated in this part. By this measure, thrust force generated in each magnetic teeth group on each field core can be balanced and an effective linear motor can be realized. In the embodiment of Fig. 11, permanent magnets 50, 503 and 504 correspond to those 50, 503 and 504 in Fig. 9, 503 and 504 have the same size and the permanent magnet which corresponds to 505 in Fig. 9 is excluded. This is an extreme case of Fig. 10 in which dimensions of permanent magnets 503 and 504 are designed at will to maintain the balance of thrust force like the embodiment in Fig. 10 and thus, the very high grade linear motor can be realized.

As explained, the linear motor of the invention has superior features that the balance of thrust force can be maintained between each magnetic teeth group while increasing thrust force at the same time, compared with prior arts. The small linear motor with large thrust force can be easily realized without damaging advantages of prior arts at all. In linear motors of the invention in Fig. 9, Fig. 10 and Fig. 11, the major part of adjacent iron cores and the field core permanent magnet are made of different materials, but there is no affect on characteristics even if they are unified in various forms. All forms of permanent magnets in the Figures are rectangular bodies, but it is not necessary to limit their forms to rectangular bodies and they can be designed at will according to forms of iron cores and field cores within the scope of the invention.

## Claims

1. A linear motor comprising: a guiding path (4) having magnetic teeth provided at a constant pitch P in the longitudinal direction of said guiding path; and a movable element (5) which is in spaced opposed relation to said guiding path with a small gap therebetween and movable along said guiding path, wherein said movable element (5) comprises: a pair of iron core arrays (51 and 52) spaced from each other in said longitudinal direction; means (50) connected between said pair of iron core arrays for supplying bias magnetic flux (501) thereto; and means (61, 62 and 63) electrically associated with said pair of iron core arrays for energizing thereof, each of said pair of iron core arrays (51 and 52) comprising a plurality of field cores (511, 512 and 513; 521, 522 and 523) disposed side by side in a transverse direction to said longitudinal direction, each of said field cores having on a surface facing said guide path teeth provided at said pitch P in said longitudinal direction, characterized in that: said teeth on the field cores (511, 512 and 513 or 521, 522 and 523) of each of the pair of iron core arrays (51 and 52) have the same spatial phase, and the phase of the teeth on the field cores (511, 512 and 513) of one of the pair of iron core arrays (51 and 52) is shifted in spatial phsae by $1/2 \cdot P$ relative to the teeth on the field cores (521, 522 and 523) of the other of the pair of iron core arrays; that the magnetic teeth of said guiding path (4) consists of parallel rows of magnetic teeth (41, 42 and 43) aligned with respective parallel field cores of the arrays, each row of said parallel rows of magnetic teeth being shifted in spatial phase by $(n/m) \cdot P$ relative to an adjacent row, where m is the number of phases of said linear motor and n being an integer, and $m > n$; and that said field cores of the arrays are arranged in pairs in the longitudinal direction with each pair consisting of one field core from each array, the field cores of each pair being aligned with a respective row of the guiding path, and the energizing means (61, 62, 63) being arranged to subsequently energise said pairs of field cores.

2. A linear motor as claimed in claim 1, wherein said guiding path (4) is formed by a lamination (71) with a multiplicity of slits therein fixed to a substrate (72) made of magnetic material.

3. A linear motor as claimed in claim 1, wherein the number of field cores (531, 532, 533, 534 and 535 or 541, 542, 543, 544 and 545) on each pair of said pair of iron core arrays (53 and 54) is 2m-j, where j is an integer satisfying the formula $m-2 \geqq j \geqq 0$, the number of means (621, 622, 623, 624 and 625) for energizing said pairs of field cores is 2m-j, each of said 2m-j means (621, 622, 623, 624 and 625) being wound around one of said 2m-j pairs of field cores respectively, the energizing means (621 and 625 or 622 and 624) being aligned symmetrically with respect to a central axis of the movable element (500) and being energized by a common mode exciting current, said central axis being in the moving direction of said movable element (500), the number of parallel rows (411, 412, 413, 414 and 415) of magnetic teeth on a guiding path (4) being 2m-j.

4. A linear motor as claimed in claim 3, wherein the teeth on each field core (531—535, 541—545) provide a group, the groups on different pairs of field cores have different areas $S_1$ and $S_2$ and the relationship between $S_1$ and $S_2$ satisfies $S_2 = 2S_1$.

5. A linear motor as claimed in claim 1, wherein the teeth on each field core of a pair in the longitudinal direction provide a group and whereby the areas of the teeth groups formed on outside pairs (511, 521, and 513, 523) are larger than the areas of the teeth groups formed on inside pairs of field cores (512, 522).

6. A linear motor as claimed in claim 1, wherein said movable element (5) further has plural permanent magnets (503, 504, 505) each magnet being disposed between respective field cores (511, 512 and 513) of each said pair of cores, said plural permanent magnets being magnetized in the same direction of said bias magnetic flux.

7. A linear motor as claimed in claim 6, wherein the size of a permanent magnet (505) positioned between a pair of inside field cores (512 and 522) is smaller than that of a permanent magnet (503 and 504) positioned between the outside field cores (511 and 521 or 513 and 523).

8. A linear motor as claimed in claim 6, wherein said means (50) connected between said iron cores (51 and 52 providing the magnetic flux is constituted by said permanent magnets.

## Patentansprüche

1. Linearmotor, enthaltend: eine Führungsbahn

(4) mit magnetischen Zähnen, die in einer konstanten Teilung P in Längsrichtung der Führungsbahn angeordnet sind, und ein bewegliches Element (5), das in einem Abstandsverhältnis der Führungsbahn mit einem kleinen Spalt dazwischen gegenübersteht und längs der Führungsbahn beweglich ist, wobei das bewegliche Element (5) enthält: ein Paar Eisenkerngruppen (51 und 52), die voneinander in der genannten Längsrichtung Abstand haben; eine mit dem Paar Eisenkerngruppen verbundene, dazwischen angeordnete Einrichtung (50) zum Zuführen eines Vormagnetisierungsflusses (501) zu den Eisenkerngruppen; und eine dem genannten Paar Eisenkerngruppen zugeordnete Einrichtung (61, 62 und 63) zum Erregen derselben, wobei jede Eisenkerngruppe (51 und 52) des Paares mehrere Feldkerne (511, 512 und 513; 521, 522 und 523) enthält, die Seite an Seite in einer Richtung quer zur genannten Längsrichtung angeordnet sind, jeder der Feldkerne auf einer Oberfläche, die der Führungsbahn gegenübersteht, Zähne aufweist, die mit der genannten Teilung P in der genannten Längsrichtung angeordnet sind, dadurch gekennzeichnet, daß die Zähne an den Feldkernen (511, 512 und 513 oder 521, 522 und 523) an jeder Eisenkerngruppe (51 und 52) des Paares die gleiche räumliche Phase aufweisen und die Phase der Zähne an den Feldkernen (511, 512 und 513) einer der Eisenkerngruppen (51 und 52) des Paares in der räumlichen Phase um $1/2 \cdot P$ gegenüber den Zähnen an den Feldkernen (521, 522 und 523) der anderen der Eisenkerngruppen des Paares verschoben ist; daß die magnetischen Zähne der Führungsbahn (4) aus parallelen Reihen magnetischer Zähne (41, 42 und 43) bestehen, die auf entsprechende parallele Feldkerne der Gruppen ausgerichtet sind, wobei jede Reihe der genannten parallelen Reihen magnetischer Zähne in der räumlichen Phase um $(n/m) \cdot P$ in bezug auf eine benachbarte Reihe verschoben ist, wobei m die Anzahl der Phasen des Linearmotors und n eine ganze Zahl ist und m>n; und daß die Feldkerne der Gruppen in Paaren in der Längsrichtung angeordnet sind, wobei jedes Paar aus einem Feldkern von jeder Gruppe besteht, die Feldkerne eines jeden Paares auf eine entsprechende Reihe der Führungsbahn ausgerichtet sind und die Erregereinrichtung (61, 62, 63) dazu eingerichtet ist, die genannten Feldkernpaare nacheinander zu erregen.

2. Linearmotor nach Anspruch 1, bei dem die Führungsbahn (4) von einem Blech (71) mit einer Vielzahl von Schlitzen darin, das auf einem Träger (72) aus magnetischem Material befestigt ist, gebildet ist.

3. Linearmotor nach Anspruch 1, bei dem die Zahl der Feldkerne (531, 532, 533, 534 und 535 oder 541, 542, 543, 544 und 545) an jeder Eisenkerngruppe (53 und 54) des Eisenkerngruppenpaares gleich 2m-j ist, wobei j eine ganze Zahl ist, die die Bedingung $m-2 \geqq j \geqq 0$ befriedigt, wobei die Anzahl der Einrichtungen (621, 622, 623, 624 und 625) zum Erregen der Feldkernpaare gleich 2m-j ist, jede der 2m-j Einrichtungen (621, 622, 623, 624 und 625) um jeweils eines der genannten 2m-j Feldkernpaare gewunden ist, die Erregungseinrichtungen (621 und 625 oder 622 und 624) symmetrisch in bezug auf eine Mittenachse des beweglichen Elements (500) ausgerichtet sind und durch einen Gleichtakterregerstrom erregt sind, wobei die Mittenachse in der Bewegungsrichtung des beweglichen Elements (500) liegt und die Anzahl paralleler Reihen (411, 412, 413, 414 und 415) magnetischer Zähne auf einer Führungsbahn (4) gleich 2m-j ist.

4. Linearmotor nach Anspruch 3, bei dem die Zähne an jedem Feldkeren (531—535, 541—545) eine Gruppe bilden, die Gruppen an unterschiedlichen Feldkernpaaren unterschiedliche Flächen $S_1$ und $S_2$ haben und das Verhältnis zwischen $S_1$ und $S_2$ die Bedingung $S_2=2S_1$ befriedigt.

5. Linearmotor nach Anspruch 1, bei dem die Zähne an jedem Feldkern eines Paares in der Längsrichtung eine Gruppe bilden und wobei die Flächen der Zahngruppen, die an außenliegenden Paaren (511, 521 und 513, 523) ausgebildet sind, größer sind, als die Flächen der Zahngruppen, die an innenliegenden Feldkernpaaren (512, 522) ausgebildet sind.

6. Linearmotor nach Anspruch 1, bei dem das bewegliche Element (5) weiterhin mehrere Permanentmagneten (503, 504, 505) aufweist, wobei jeder Magnet zwischen entsprechenden Feldkernen (511, 512 und 513) eines jeden Feldkernpaares liegt, wobei die vielen Permanentmagneten in der gleichen Richtung des Vormagnetisierungsflusses magnetisiert sind.

7. Linearmotor nach Anspruch 6, bei dem die Größe eines Permanentmagneten (505), der zwischen einem Paar innenliegender Feldkerne (512 und 522) liegt, kleiner ist, als die eines Permanentmagneten (503 und 504), der zwischen den außenliegenden Feldkernen (511 und 521 oder 513 und 523) angeordnet ist.

8. Linearmotor nach Anspruch 6, bei dem die den magnetischen Fluß erzeugende Einrichtung (50), die zwischen den Eisenkernen (51 und 52) angeordnet und mit diesen verbunden ist, von den Permanentmagneten gebildet ist.

**Revendications**

1. Moteur linéaire comprenant un trajet de guidage (4) ayant des dents magnétiques disposées avec un pas constant P dans la direction longitudinale du trajet de guidage, et un élément mobile (5) disposé en face du trajet de guidage et séparé par celui-ci par un petit entrefer et mobile le long de trajet de guidage, l'élément mobile (5) comprenant deux arrangements (51, 52) de noyaux de fer doux distants l'un de l'autre dans la direction longitudinale, un dispositif (50) monté entre les deux arrangements de noyaux de fer doux et destiné à transmettre un flux magnétique de polarisation (501) à ces arrangements, et un dispositif (6, 62 et 63) associé électriquement à la paire d'arrangements de noyaux de fer doux et destiné à les exciter, chacun des deux arrangements (51 et 52) comprenant plusieurs noyaxu de champ (511, 512 et 513; 521, 522 et 523) placés côte à côte en direction transversale à la direction longitudinale, chacun des noyaux de champ ayant, sur une face tournée vers le trajet de guidage, des dents disposées avec le pas P dans la direction longitudinale, caractérisé en ce que les dents des noyaux de champ (511, 512 et 513 ou 521, 522 et 523) de chacun des arrangements de noyaux de fer (51 et 52) ont la même phase spatiale, et la phase des dents des noyaux de champ (511, 512 et 513) de l'un des arrangements (51, 52) de la paire d'arrangements de noyaux de fer doux est décalée, en phase spatiale, de 1/2P par rapport aux dents des noyaux de champ (521, 522 et 523) de l'autre des deux arrangements de noyaux de fer, en ce que les dents magnétiques du trajet de guidage (4) sont formées de lignes parallèles de dents magnétiques (41, 42 et 43) alignées sur les noyaux parallèles respectifs de champ des arrangements, chaque ligne des lignes parallèles de dents magnétiques étant décalée, en phase spatiale, de $(n/m) \cdot P$ par rapport à une ligne adjacente, m étant le nombre de phases du moteur linéaire et n un nombre entier, et m>n, et en ce que les noyaux de champ des arrangements sont disposés par paires dans la direction longitudinale, chaque paire étant formée d'un noyau de champ de chaque arrangements, les noyaux de champ de chaque paire étant alignés sur une ligne respective du trajet de guidage, et le dispositif d'excitation (61, 62, 63) étant disposé afin qu'il alimente successivement les paires de noyaux de champ.

2. Moteur linéaire selon la revendication 1, dans lequel le trajet de guidage (4) est formé par un feuilletage (71) ayant de nombreuses fentes et fixé à un substrate (72) formé d'un matériau magnétique.

3. Moteur linéaire selon la revendication 1, dans lequel le nombre de noyaxu de champ (531, 532, 533, 534 et 535 ou 541, 542, 543, 544 et 545) de chacun des arrangements de la paire d'arrangements de noyaux de fer doux (53 et 54) est égal à 2m-j, j étant un nombre entier satisfaisant à la formule m-2>j>0, le nombre de dispositifs (621, 622, 623, 624 et 625) d'excitation des paires de noyaux de champ est égal à 2m-j, chacun des 2m-j dispositifs (621, 622, 623, 624 et 625) étant enroulé autour de l'une des 2m-j paires de noyaux de champ respectivement, les dispositifs d'excitation (621 et 625 ou 622 et 624) étant alignés symétriquement par rapport à un axe central de l'élément mobile (500) et étant alimentés par un courant d'excitation en mode commun, l'axe central étant disposé dans la direction de déplacement de l'élément mobile (500), le nombre de lignes parallèles (411, 412, 413, 414 et 415) de dents mangétiques formées sur le trajet de guidage (4) étant égal à 2m-j.

4. Moteur linéaire selon la revendication 3, dans lequel les dents de chaque noyau de champ (531—535) 541—545) forment un groupe, les groupes de différentes paires de noyaux de champ ont des surfaces différentes $S_1$ et $S_2$, et la relation entre $S_1$ et $S_2$ est telle que $S_2=2S_1$.

5. Moteur linéaire selon la revendication 1, dans lequel les dents de chacun des noyaux de champ d'une paire, en direction longitudinale, forment un groupe, et les surfaces des groupes de dents formées sur les paires externes (511, 521, et 513, 523) sont supérieures aux surfaces des groupes de dents formées sur les paires internes de noyaxu de champ (512, 522).

6. Moteur linéaire selon la revendication 1, dans lequel l'élément mobile (5) comporte en outre plusieurs aimants permanents (503, 504, 505), chaque aimant étant disposé entre des noyaux respectifs de champ (511, 512 et 516) de chaque paire de noyaux, les aimants permanents étant aimantés dans le sens du flux magnétique de polarisation.

7. Moteur linéaire selon la revendication 6, dans lequel la dimension d'un aimant permanent (505) placé entre une paire de noyaux internes de champ (512 et 522) est inférieure à celle d'un aimant permant (503 et 504) placé entre les noyaux externes de champ (511 et 521 ou 513 et 523).

8. Moteur linéaire selon la revendication 6, dans lequel ledit dispositif (50) monté entre les noyaux de fer doux (51 et 52) formant le flux magnétique est constitué par lesdits aimants permanents.

# Fig. 1

(A)

(B)

(C)

(D)

# Fig. 2

# Fig. 3

(A)

(B)

(C)

(D)

0 093 547

Fig. 4

4

# Fig. 5

# Fig. 6

(A)

(B)

# Fig. 7

(A)

(B)

(C)

(D)

0 093 547

# Fig. 8

# Fig. 9

(A)

(B)

(C)

(D)

(E)

# Fig. 10

(A)

(B)

(C)

(D)

(E)

# Fig. 11